# EUROPEAN PATENT SPECIFICATION

(11) **EP 3 392 518 B1**
(45) Date of publication and mention of the grant of the patent: **05.06.2024**
(21) Application number: 18168480.4
(22) Date of filing: 20.04.2018
(51) Int. Cl.: F16D 66/02, F16D 3/06

(54) **AXIALLY PIN MOUNTED MECHANICAL WEAR INDICATOR FOR BARREL COUPLING**
ACHSZAPFENMONTIERTER MECHANISCHER VERSCHLEISSINDIKATOR FÜR ZYLINDERKUPPLUNG
INDICATEUR D'USURE MÉCANIQUE MONTÉ AXIALEMENT SUR UNE BROCHE POUR COUPLAGE DE BARILLET

(30) Priority: 21.04.2017 IN 201721014298
(43) Date of publication of application: 24.10.2018
(73) Proprietor: Regal Beloit Spain, S.A., 20159 Zizurkil (ES)
(72) Inventor: DALAL, Umesh Shrikrishna, 411033 Pune Maharashtra (IN); RAUT, Swapnil Kaluram, 411028 Pune Maharashtra (IN); URESBERUETA, Inaki, 20170 Gipuzkoa (ES)
(74) Representative: Kilburn & Strode LLP

(56) References cited:
- CN-U- 201 475 183
- DE-B3-102006 022 782
- DE-U- 1 832 263
- DE-U1-202008 009 373
- US-B1- 6 206 158

## Description

### BACKGROUND AND SUMMARY

This section provides background information related to the present invention which is not necessarily prior art. This section also provides a general summary of the invention, and is not a comprehensive disclosure of its full scope or all of its features.

In prior art barrel coupling, wear is a common phenomenon which occurs due to sliding and rolling actions of the barrel over the barrel coupling hub and sleeve pocket interface. Because of the wear, the tooth becomes weaker over a period of time. In light of this wear, there is a relative displacement between the hub and sleeve pocket positions. As can be appreciated by one skilled in the art, it is important to replace the barrel coupling when the predefined wear limit is reached. Acceptable wear values range from 4-8 mm depending upon the size of the barrel coupling. Exceeding these values may lead to coupling failure and accidents.

The present invention provides an assembly comprising a barrel coupling system and a mechanical wear indicator according to the claims that is capable of indicating a worn out condition of the barrel coupling in a precise manner with clear visibility due to its improved construction relative to conventional designs. The mechanical wear indicator of the present invention further enables the operator to complete the initial alignment of the barrel coupling during the installation stage.

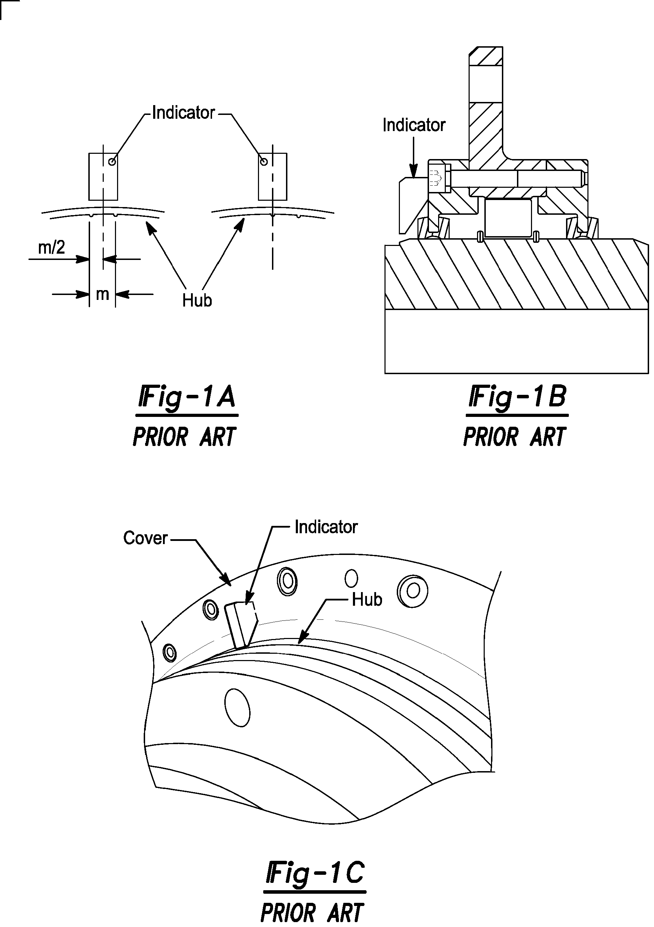

By way of background, barrel couplings wear out during usage. Once a maximum wear limit is reached (e.g. 4/6/8 mm for small/medium/large couplings), the barrel coupling should be replaced or repaired. Presently, wear indicator pointers are welded to the sleeve face. Two V-notches having a specified distance between facing edges are marked on the hub outer diameter, which represents the allowable wear limit, m (see FIGS. 1A-1C).

When wear occurs during the operating life of the barrel coupling, a relative displacement between hub and sleeve pocket is formed. This relative position can be identified when a pointer or indicator touches or aligns with the V-groove or notch marked on the hub, thereby indicating the barrel coupling should be replaced. More particularly, wear limit is reached when the central groove on the pointer comes in line with either edge of the V-groove.

Current wear indication solutions do not provide sufficient visibility in all situations. More particularly, the 'V' or 'U' notch or wear marks that are provided on the hub have small width and depth, which are not properly visible/readable. These 'V' notches often become hidden due to dust, dirt, and/or corrosion (See FIG. 1C). Moreover, wear can only be monitored from the front side. However, there is often difficulty in viewing from the front side due to limited space between adjacent gear box and drum flange. Wear cannot be monitored from the top side, because no reference point or mark is provided on the top of the pointer and 'V' notches are not visible from the top due to pointer thickness. Finally, there is often insufficient light and/or limited space available at actual installations that create further difficulty in reading the conventional indicator.

In some conventional designs, such as German Patent No. DE 20 2008 009 373 U1 (see FIG. 2A-2E), a wear indicator is provided for showing wear in the connection between the joint parts in a rope drum coupling, with an indicator arranged at one of the joint parts and at least two wear markings (102, 104) comprised of rims 106, 108 that face each other of a common recess (110).

German Patent No. DE 102006022782 B3 discloses a joint which has a gear-sided and a drum-sided hinge. A wear-indicator has a sensor (18,18') for displaying the wear of a form-fit connection between the hinges (7,7',17,17'). An electronic control unit (15,15') is provided for processing the sensor signals. The control unit is formed by obtaining a wear of the connection for generating a signal. The indicator has a release pin arranged on the hinge, which is pre-stressed by a spring element against a catch. The pin supports a movable indicating pin below a wear limit and releases the movement of the indicating pin by obtaining the wear limit.

Further areas of applicability will become apparent from the description provided herein. The description and specific examples in this summary are intended for purposes of illustration only and are not intended to limit the scope of the present invention.

### DRAWINGS

The drawings described herein are for illustrative purposes only of selected embodiments and not all possible implementations, and are not intended to limit the scope of the present invention.
FIGS. 1A-1C illustrate a conventional wear indicator for a barrel coupling.

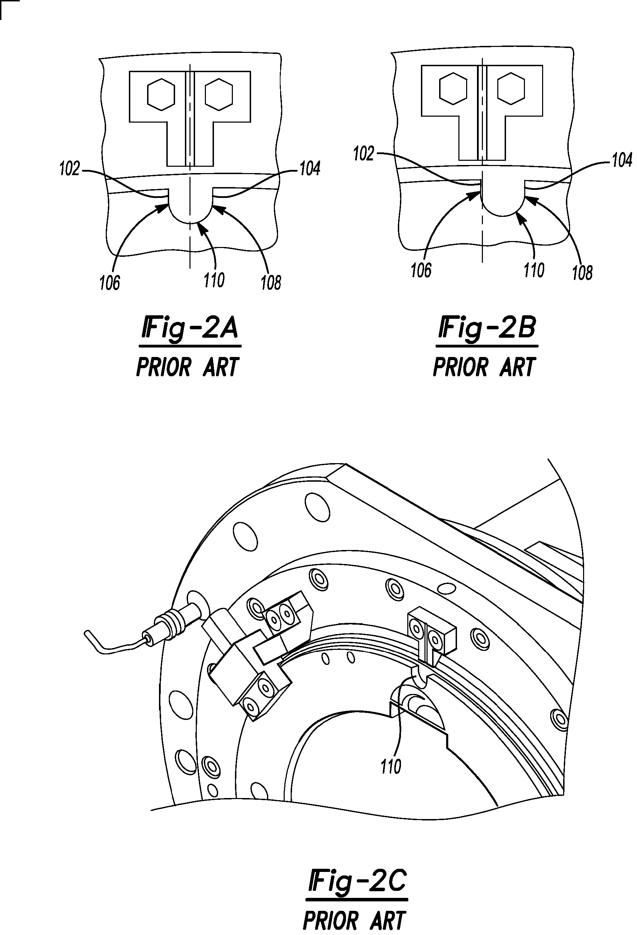

FIGS. 2A-2E illustrate a conventional wear indicator as illustrated in German Patent No. DE 20 2008 009 373 U1.
FIG. 3A is a cross-sectional view of a barrel coupling according to the principles of the present invention.
FIG. 3B is an end view of the barrel coupling according to the principles of the present invention.
FIGS. 4A-4D are schematic diagrams of a mechanical wear indicator according to the principles of the invention.
FIGS. 5-8 illustrate the mechanical wear indicator system according to some embodiments of the present invention.
FIGS. 9A-9D illustrate the mechanical wear indicator system according to some embodiments of the present invention having a non-contact configuration.
FIGS. 10A-10D illustrate the mechanical wear indicator system according to some embodiments of the present invention having a non-contact rectangular pin.
FIGS. 11A-11D illustrate the mechanical wear indicator system according to some embodiments of the present invention having two non-contact square axial pins.
FIGS. 12A-12D illustrate the mechanical wear indicator system according to some embodiments of the present invention having a non-contact straight/flat side pointer with slot or opening at center.
FIGS. 13A-13C illustrate the mechanical wear indicator system according to some embodiments of the present invention having a contact straight side pointer and cylindrical pins.
FIG. 14 illustrates the mechanical wear indicator system according to some embodiments of the present invention.
FIGS. 15A-15D illustrates the mechanical wear indicator system according to some embodiments of the present invention having holes in the pointer that can be used as a visual indicator.
FIG. 16 illustrates the mechanical wear indicator system according to some embodiments of the present invention having an electronic indication system.

Corresponding reference numerals indicate corresponding parts throughout the several views of the drawings, unless otherwise noted.

### DETAILED DESCRIPTION

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the invention. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

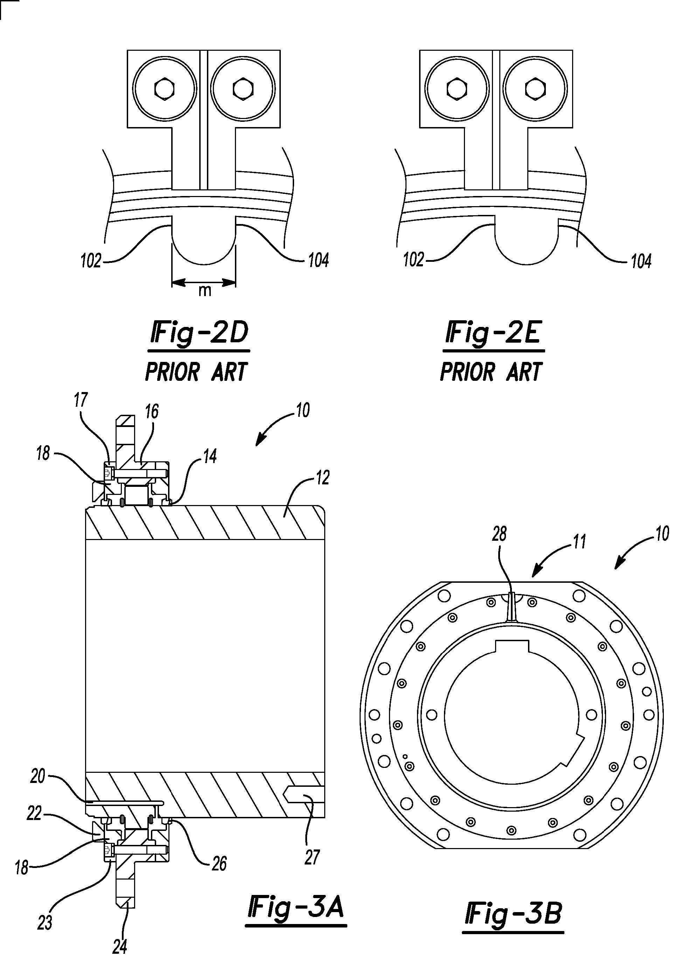

According to the principles of the present invention, a mechanical wear indicator system 11 is provided for use with a barrel coupling system 10. In some embodiments, barrel coupling system 10 is a barrel coupling system as disclosed in Exhibit A of Indian Provisional Application No. 201721014298 filed on April 21, 2017. In some embodiments, as illustrated in FIGS. 3A-3B, barrel coupling system 10 comprises a hub 12, a seal 14, a barrel 16, an Allen screw 17, a grower washer 18, a grease overflow 20, an outer cover 22, an Allen screw 23, a sleeve 24, and inner cover 26, puller holes 27, and lubrication point 28. Mechanical wear indicator system 11 is incorporated with barrel coupling system 100.

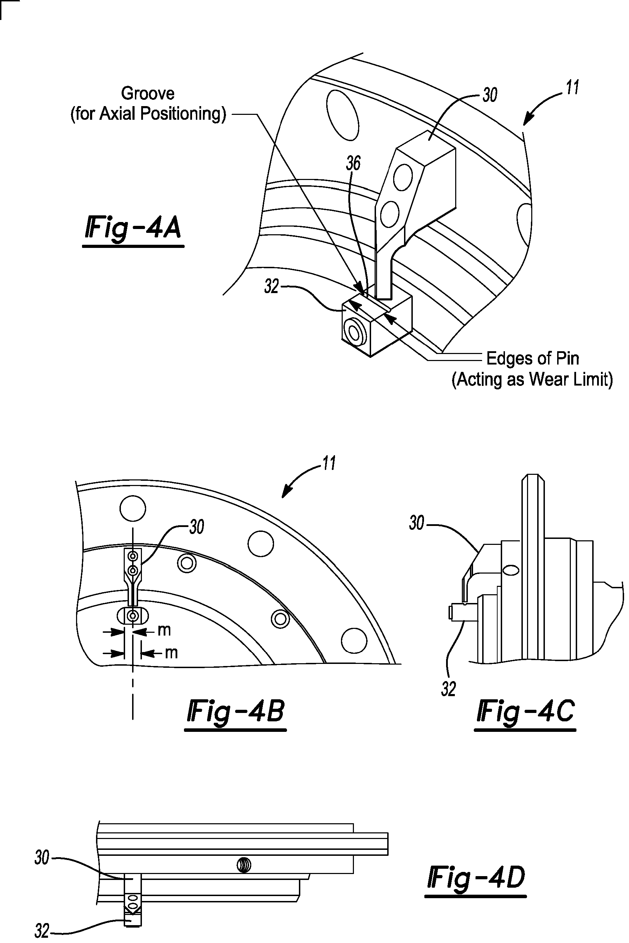

In some embodiments of the present invention, as illustrated and referenced in FIGS. 4A-17, mechanical wear indicator system 11 comprises a pointer 30 and at least one corresponding axially-mounted pin 32 that together are configured to provide wear indication of barrel coupling 10. In some embodiments, pointer 30 and pin 32 can be mounted either on hub 12 or on sleeve 24, or vice versa.

In some embodiments, pointer 30 is configured to be readily visible from a front position (i.e. facing along an axis of barrel coupling 10) or a top position (i.e. facing from a position orthogonal to the axis of barrel coupling 10 and generally along an elongated axis of pointer 30). In some embodiments, pointer 30 can comprise two or more holes through which it will be bolted to the cover or other structure of barrel coupling 10. However, in some embodiments, pointer 30 can be welded to the cover face or other structure of barrel coupling 10. In some embodiments, pointer 30 can be shaped to include a pointed edge or tip 34.

Axially-mounted pin(s) 32 is provided for use in conjunction with pointer 30. In some embodiments, pin 32 is square shaped for improved indication. However, in some embodiments, pin 32 can be cylindrical shaped. In some embodiments, pin 32 is made hollow to allow a fastener to secure it against the hub face. A recess can be provided on the hub face to receive the pin 32 therein.

The pointed tip 34 can be used as a reference edge for showing wear limit as well as for axial position setting of sleeve during installation, thereby simplifying the installation process. To this according to the invention, the axially mounted square pin 32 comprises an alignment groove 36 positionable relative to edge 34 of pointer 30 to facilitate quick alignment of sleeve 12 during installation.

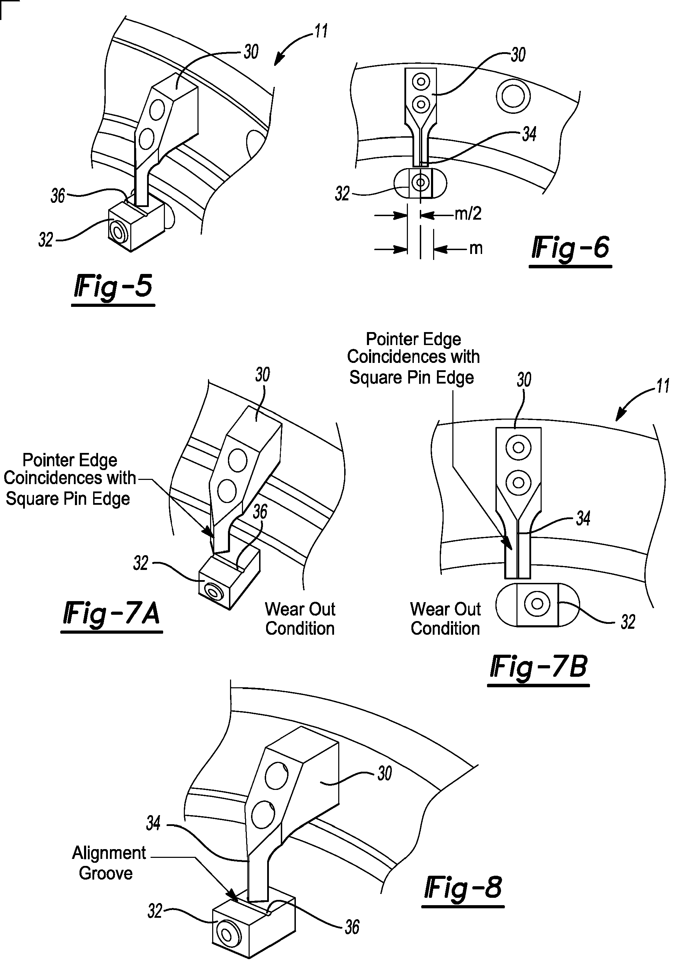

In some embodiments, square pin 32 and pointer 30 comprise straight edges that permit the wear limits to be precisely visible, because the edge of pin 32 and the edge of pointer 30 will be perpendicular to each other. The width of pin 32 is equal to the allowable wear limit as per catalogue. Therefore, when barrel coupling 10 is newly installed, the tip or edge 34 of pointer 30 will be centered relative to square pin 32 as shown in FIG. 6.

During coupling installation, the alignment groove 36 plays an important role for quicker initial alignment of coupling barrel 10. The operator can thus maintain the distance (between the sleeve/ barrel centre and hub face) as per installation manual precisely during the installation.

During operation, when pointer 30 moves by an amount equal to wear limit on either side of square pin 32 (i.e. by reaching and/or crossing the pin 32) , it means that the wear limit is reached and barrel coupling 10 needs to be replaced. Therefore, the amount of wear in barrel coupling 10 can be inspected by comparing the relative position of the pointer edge (tip) 34 with respect to the edges of square pin 32 on the hub 1 as illustrated in FIG. 7.

The present invention clearly differentiates from existing solutions by its ability to monitor the wear limit effectively, specifically by:
a. having square pin 32 and pointer 30 in straight edge form to facilitate reading the wear limit precisely since the pin edge and pointer edge will be perpendicular to each other;
b. the shape of the pointer 30 is designed in such a way that the wear limit can be clearly seen from front as well as from the top view;
c. the deep groove 36 on the axially mounted pin will help to perform better alignment and positioning of the sleeve with respect to hub face; and
d. providing a simplified installation process.

### Alternatives

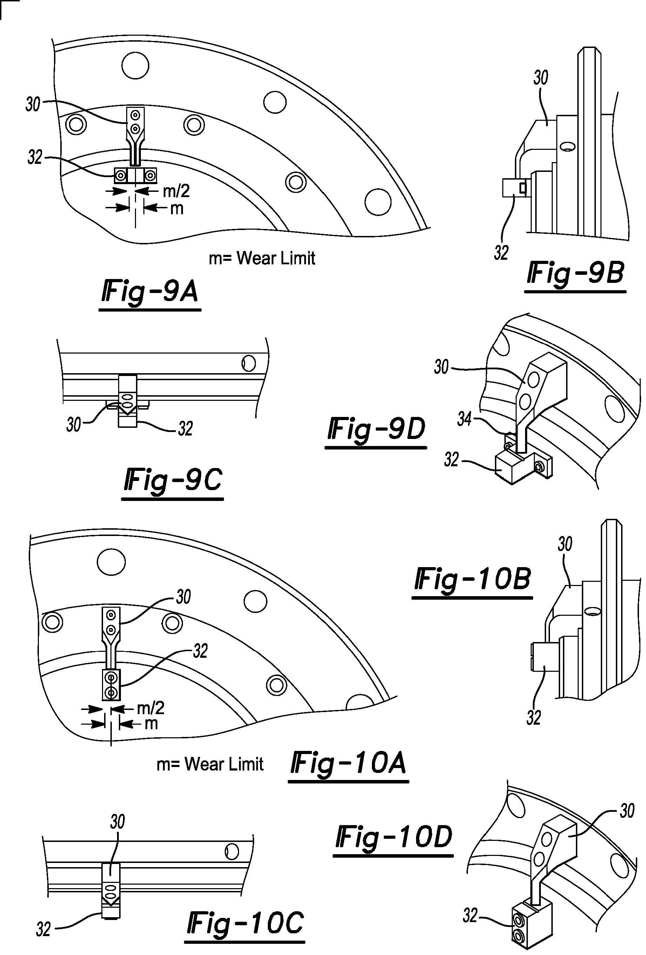

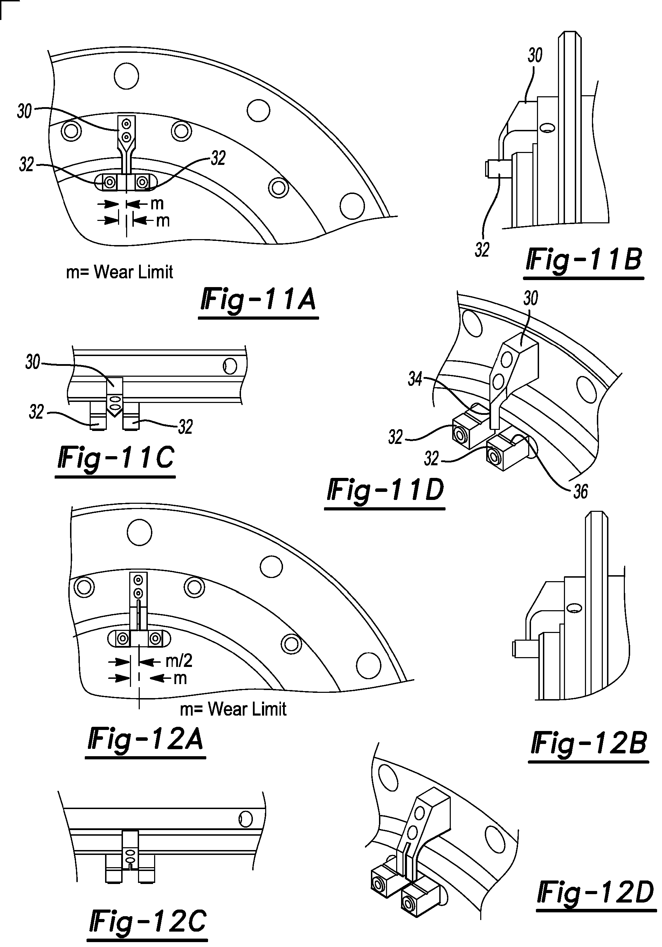

In some embodiments, alternative can comprise pin 32 being fastened to hub face via one or more fasteners, thereby eliminating a milled slot on the hub face as previously disclosed (see FIGS. 9A-9D). In some embodiments, a rectangular-shaped axial pin 32 can be used, thereby providing an alternative orientation of the associated fasteners (FIGS. 10A-10D). In some embodiments, a pair of square pins 32 can be employed, whereby both pins are axially mounted on hub face with two fasteners as shown and can be located inside a milled slot on hub (FIGS. 11A-11D).

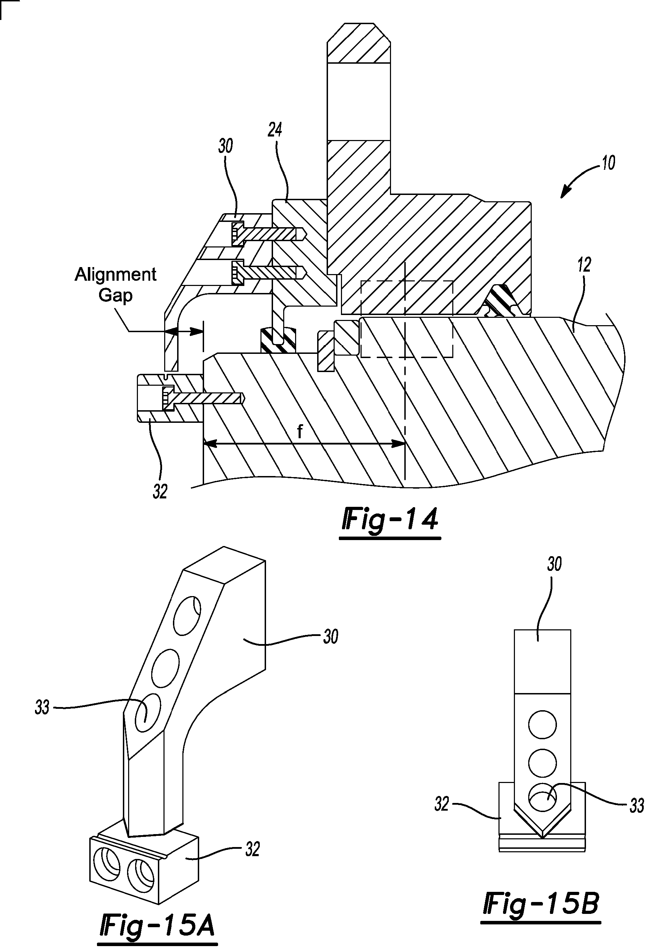

In some embodiments, as illustrated in FIGS. 12A-12D and 14, a pair of pins 32 can be employed in conjunction with a square shaped pointer 30. A slit can be provided at the center of the pointer to be used in conjunction with inside edges of pins 32 to indicate wear limits (FIG. 12D).

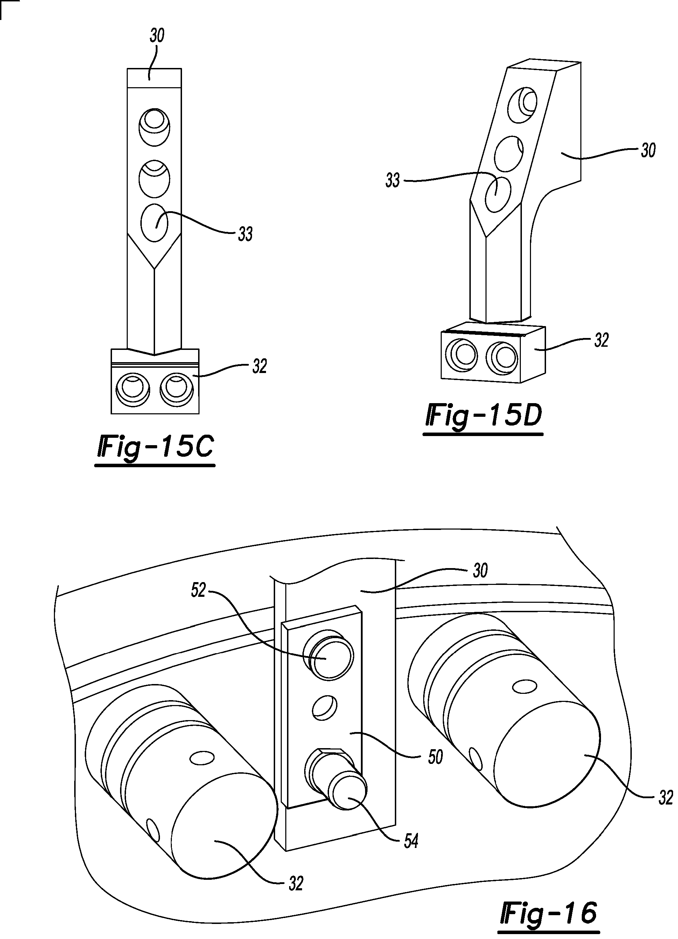

In some embodiments, as illustrated in FIGS. 15A-15D, the pointer 30 can comprise one or more through holes 33 extending therethrough that permit visual inspection of the corresponding pin 32. If an edge or other indicator on pin 32 is visible within hole 33 then wear limits have been achieved.

### Axially Pin Mounted Contact Type Mechanical Wear Indicator:

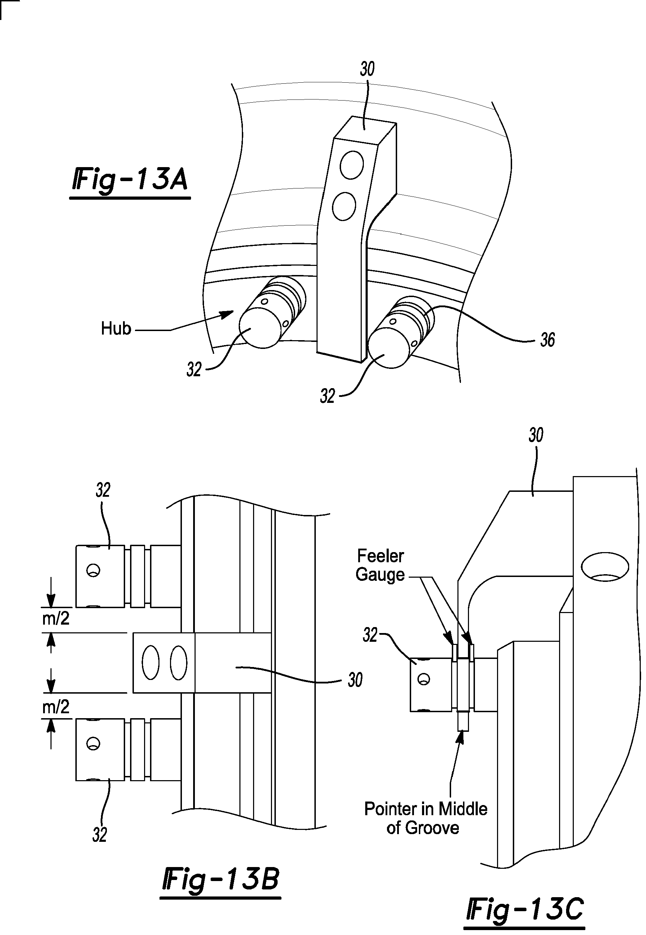

In some embodiments, as indicated in FIGS. 13A-13C, two cylindrical pins 32 can be used and positioned such that they are spaced apart a predetermined distance equal to the wear limit of barrel coupling 10. In some embodiments, pins 32 are provided with 2 small holes 180 degrees apart or 4 holes at 90 degrees apart which will help to tighten the pins onto the hub. Pins 32 can be mounted either on hub or on sleeve, pins are mounted through threads and necessary location fit. The threads can be tightened through holes as shown or by means of head with across flat 180 degree apart or can be mounted through socket head / hex head or countersunk screws and the like.

In some embodiments, pins 32 are provided with two deep grooves. These grooves will help to position the sleeve / drum flange with respect to the hub face. The feeler gauges or similar measuring devices will be used to position the barrel. Once the alignment between both pins across the same groove is ensured, calliper can be used to measure distance between the groove and hub face. This will help to maintain the distance between hub face and sleeve face and between the sleeve/barrel center and hub face precisely during the installation. During operation, pointer 30 can come in contact with pins 32 to indicate wear limit. In some embodiments, the pointer 30 will have two holes through which it will be bolted to the cover. The pointer can be mounted either on the hub or on the sleeve and the pointer can be welded, bolted or riveted.

In some embodiments, one or both of the pointer 30 and pin 32 can be coated with a reflective material to facilitate or enhance visibility in varying lighting and environmental conditions.

### Advantages:

The present invention clearly differentiates the existing solution mainly from customer's satisfaction and ability to monitor the wear limit effectively because of: a) having the pins in round shape, and pointer in straight form which creates a line contact when pointer will touch to the pin; and b) having physical contact between pointer and pin surface when crossing or reaching the wear limit. This will increase the visibility.

The deep groove on the axially mounted pins will help to perform better alignment and positioning of the sleeve with respect to hub face.

As the pins are positioned axially on hub, larger axial displacement of sleeve can be possible.

The present invention simplifies the installation process.

Visual light signalling using electrical circuitry: As illustrated in FIG. 16, with the axial pin and pointer construction, the pins 32 and pointer 30 can be connected with short wires or other electronic means 50 (e.g. printed circuit board (PCB)) to a power source 52 (e.g. battery) and alert system 54. The electronic means 50 and power source 52 can be mounted between pins 32 or on pointer 30 or suitable location. When pointer 30 touches the axial pin 32, the electronic circuit is closed resulting in illumination of an LED light 54, which thus indicates that barrel coupling 10 has reached its maximum wear limit. Further, the signals can be used to activate a sound / warning alarm 54. Apart from this the signal can also be passed to Crane PLC through different communication means.

The foregoing description of the embodiments has been provided for purposes of illustration and description. It is not intended to be exhaustive or to limit the invention which is defined by the claims. Individual elements or features of a particular embodiment are generally not limited to that particular embodiment, but, where applicable, are interchangeable and can be used in a selected embodiment, even if not specifically shown or described. The same may also be varied in many ways.

## Claims

1. An assembly comprising a mechanical wear indicator system (11) and a barrel coupling system (10), the barrel coupling system having a barrel (16), cover, sleeve (24), and a hub (12), the mechanical wear indicator system comprising:
a pointer member (30) configured to be coupled to one of the cover, sleeve (24), and the hub (12); and
at least one pin member (32) configured to be coupled to the other of the cover, sleeve, and the hub, the at least one pin member being positioned relative to the pointer member to indicate relative wear between the sleeve and the hub,
**characterised in that**
the at least one pin member (32) having a major axis parallel to a rotation axis of the barrel coupling system; and
**in that** the at least one pin member (32) comprises at least one groove, the at least one pointer (30) and the at least one groove collectively providing alignment indications during installation of the barrel coupling system (10).

2. The assembly according to Claim 1 wherein the pointer member (30) does not contact the at least one pin member (32).

3. The assembly according to Claim 1 wherein the pointer member (30) contacts the at least one pin member (32) once a predetermined wear of the sleeve (24) and the hub (12) has occurred.

4. The assembly according to Claim 1 wherein the at least one pin member (32) comprises at least one flat side and the pointer member (30) comprises indicia, wherein alignment of the indicia of the pointer member and the at least one flat side of the at least one pin member is indicative of predetermined wear limit.

5. The assembly according to Claim 1 wherein the pointer (30) comprises an edge (34).

6. The assembly according to Claim 1 wherein the at least one pin member (32) comprises a pair of pin members, wherein each of the pair of pin members includes an inner edge surface, a distance between the opposing inner edge surfaces being equal to a predetermined wear limit.

7. The assembly according to Claim 1 wherein the at least one pin member (32) comprises a pair of pin members, wherein each of the pair of pin members includes an inner surface, a distance between the opposing inner surfaces being equal to a predetermined wear limit,
wherein the pointer (30) is configured to contact at least one of the pair of pin members.

8. The assembly according to Claim 1 wherein the pointer (30) is configured to be fastened or would to the one of the cover, sleeve (24), and the hub (12).

9. The assembly according to Claim 1 wherein the pointer (30) comprises an indicia, wherein the indicia is a central groove.

10. The assembly according to Claim 1 wherein the pointer (30) comprises an indicia, wherein the indicia is an angled surface.

11. The assembly according to Claim 1 wherein a width of the at least one pin (32) equals a predetermined wear limit.

12. The assembly according to Claim 1 wherein the pointer member (30) comprises a through hole (33) configured to be aligned with the at least one pin member (32) such that the at least one pin member is alignable relative to the pointer member to indicate relative wear between the sleeve and the hub.

13. The assembly according to Claim 1, further comprising:
a power source (52);
an indicator system (54); and
an electronic circuit (50) electrically coupled between the power source, the indicator system, the at least one pin member (32), and the pointer member (30),
wherein physical contact of the pointer member and the at least one pin member that is indicative of relative wear between the sleeve and the hub closes the electronic circuit and actuates the indicator system.

## Patentansprüche

1. Anordnung, umfassend ein mechanisches Verschleißindikatorsystem (11) und ein Zylinderkupplungssystem (10), wobei das Zylinderkupplungssystem einen Zylinder (16), eine Abdeckung, eine Hülse (24) und eine Nabe (12) aufweist, wobei das mechanische Verschleißindikatorsystem Folgendes umfasst:
ein Zeigerelement (30), das dazu ausgelegt ist, mit der Abdeckung, Hülse (24) oder Nabe (12) gekoppelt zu sein; und
mindestens ein Zapfenelement (32), das dazu ausgelegt ist, mit dem anderen Element der Abdeckung, Hülse oder Nabe gekoppelt zu sein, wobei das mindestens eine Zapfenelement in Bezug zum Zeigerelement positioniert ist, um einen relativen Verschleiß zwischen der Hülse und der Nabe anzuzeigen, **dadurch gekennzeichnet, dass** das mindestens eine Zapfenelement (32) eine Hauptachse aufweist, die parallel zur Drehachse des Zylinderkupplungssystems ist; und
dadurch, dass das mindestens eine Zapfenelement (32) mindestens eine Nut umfasst, wobei der mindestens eine Zeiger (30) und die mindestens eine Nut zusammen Ausrichtungsanzeigen während des Einbaus des Zylinderkupplungssystems (10) vorsehen.

2. Anordnung nach Anspruch 1, wobei das Zeigerelement (30) das mindestens eine Zapfenelement (32) nicht berührt.

3. Anordnung nach Anspruch 1, wobei das Zeigerelement (30) das mindestens eine Zapfenelement (32) berührt, sobald ein festgelegter Verschleiß der Hülse (24) und der Nabe (12) aufgetreten ist.

4. Anordnung nach Anspruch 1, wobei das mindestens eine Zapfenelement (32) mindestens eine plane Seite umfasst und das Zeigerelement (30) Markierungen umfasst, wobei die Ausrichtung der Markierungen des Zeigerelements und der mindestens einen planen Seite des mindestens einen Zapfenelements eine festgelegte Verschleißgrenze anzeigt.

5. Anordnung nach Anspruch 1, wobei der Zeiger (30) eine Kante (34) umfasst.

6. Anordnung nach Anspruch 1, wobei das mindestens eine Zapfenelement (32) ein Paar Zapfenelemente umfasst, wobei jedes Zapfenelement des Paars eine Innenkantenfläche umfasst, wobei die Entfernung zwischen den entgegengesetzten Innenkantenflächen einer festgelegten Verschleißgrenze entspricht.

7. Anordnung nach Anspruch 1, wobei das mindestens eine Zapfenelement (32) ein Paar Zapfenelemente umfasst, wobei jedes Zapfenelement des Paars eine Innenfläche umfasst, wobei die Entfernung zwischen den entgegengesetzten Innenflächen einer festgelegten Verschleißgrenze entspricht,
wobei der Zeiger (30) dazu ausgelegt ist, mindestens ein Zapfenelement des Paars zu berühren.

8. Anordnung nach Anspruch 1, wobei der Zeiger (30) dazu ausgelegt ist, an der Abdeckung, Hülse (24) oder Nabe (12) befestigt oder verschweißt zu sein.

9. Anordnung nach Anspruch 1, wobei der Zeiger (30) eine Markierung umfasst, wobei die Markierung eine mittige Nut ist.

10. Anordnung nach Anspruch 1, wobei der Zeiger (30) eine Markierung umfasst, wobei die Markierung eine angewinkelte Fläche ist.

11. Anordnung nach Anspruch 1, wobei die Breite des mindestens einen Zapfens (32) einer festgelegten Verschleißgrenze entspricht.

12. Anordnung nach Anspruch 1, wobei das Zeigerelement (30) eine Durchgangsbohrung (33) umfasst, die dazu ausgelegt ist, mit dem mindestens einen Zapfenelement (32) derart ausgerichtet zu sein, dass das mindestens eine Zapfenelement in Bezug zum Zeigerelement ausrichtbar ist, um den relativen Verschleiß zwischen der Hülse und der Nabe anzuzeigen.

13. Anordnung nach Anspruch 1, ferner umfassend:
eine Energiequelle (52);
ein Indikatorsystem (54) und
einen elektronischen Schaltkreis (50), der zwischen die Energiequelle, das Indikatorsystem, das mindestens eine Zapfenelement (32) und das Zeigerelement (30) elektrisch gekoppelt ist,
wobei der physische Kontakt des Zeigerelements und des mindestens einen Zapfenelements, der den relativen Verschleiß zwischen der Hülse und der Nabe anzeigt, den elektronischen Schaltkreis schließt und das Indikatorsystem betätigt.

## Revendications

1. Ensemble comprenant un système indicateur d'usure mécanique (11) et un système de couplage de barillet (10), le système de couplage de barillet ayant un barillet (16), un couvercle, un manchon (24), et un moyeu (12), le système indicateur d'usure mécanique comprenant :
un élément pointeur (30) conçu pour être couplé à l'un du couvercle, du manchon (24) et du moyeu (12) ; et
au moins un élément broche (32) conçu pour être couplé à l'autre du couvercle, du manchon et du moyeu, l'au moins un élément broche étant positionné par rapport à l'élément pointeur pour indiquer une usure relative entre le manchon et le moyeu, **caractérisé en ce que** l'au moins un élément broche (32) présente un axe principal parallèle à un axe de rotation du système de couplage de barillet ; et
**en ce que** l'au moins un élément broche (32) comprend au moins une rainure, l'au moins un pointeur (30) et l'au moins une rainure fournissant conjointement des indications d'alignement pendant l'installation du système de couplage de barillet (10).

2. Ensemble selon la revendication 1, dans lequel l'élément pointeur (30) n'entre pas en contact avec l'au moins un élément broche (32).

3. Ensemble selon la revendication 1, dans lequel l'élément pointeur (30) entre en contact avec l'au moins un élément broche (32) après qu'une usure prédéterminée du manchon (24) et du moyeu (12) s'est produite.

4. Ensemble selon la revendication 1, dans lequel l'au moins un élément broche (32) comprend au moins un côté plat et l'élément pointeur (30) comprend des indices, dans lequel l'alignement des indices de l'élément pointeur et de l'au moins un côté plat de l'au moins un élément broche indique une limite d'usure prédéterminée.

5. Ensemble selon la revendication 1, dans lequel le pointeur (30) comprend un bord (34).

6. Ensemble selon la revendication 1, dans lequel l'au moins un élément broche (32) comprend une paire d'éléments broches, dans lequel chacun de la paire d'éléments broches comprend une surface de bord interne, une distance entre les surfaces de bord internes opposées étant égale à une limite d'usure prédéterminée.

7. Ensemble selon la revendication 1, dans lequel l'au moins un élément broche (32) comprend une paire d'éléments broches, dans lequel chacun de la paire d'éléments broches comprend une surface interne, une distance entre les surfaces internes opposées étant égale à une limite d'usure prédéterminée,
dans lequel le pointeur (30)b est conçu pour entrer en contact avec au moins l'un de la paire d'éléments broches.

8. Ensemble selon la revendication 1, dans lequel le pointeur (30) est conçu pour être fixé ou soudé sur l'un du couvercle, du manchon (24) et du moyeu (12).

9. Ensemble selon la revendication 1, dans lequel le pointeur (30) comprend des indices, dans lequel les indices sont une rainure centrale.

10. Ensemble selon la revendication 1, dans lequel le pointeur (30) comprend des indices, dans lequel les indices sont une surface inclinée.

11. Ensemble selon la revendication 1, dans lequel une largeur de l'au moins une broche (32) est égale à une limite d'usure prédéterminée.

12. Ensemble selon la revendication 1, dans lequel l'élément pointeur (30) comprend un trou traversant (33) conçu pour être aligné avec l'au moins un élément broche (32) de sorte que l'au moins un élément broche peut être aligné par rapport à l'élément pointeur pour indiquer une usure relative entre le manchon et le moyeu.

13. Ensemble selon la revendication 1, comprenant en outre :
une source d'alimentation (52) ;
un système indicateur (54) ; et
un circuit électronique (50) couplé électriquement entre la source d'alimentation, le système indicateur, l'au moins un élément broche (32), et l'élément pointeur (30), dans lequel un contact physique de l'élément pointeur et de l'au moins un élément broche qui indique une usure relative entre le manchon et le moyeu ferme le circuit électronique et actionne le système indicateur.
